# EUROPÄISCHE PATENTANMELDUNG

(11) **EP 3 219 477 A1**
(43) Veröffentlichungstag der Anmeldung: **20.09.2017**
(21) Anmeldenummer: 16206035.4
(22) Anmeldetag: 22.12.2016
(51) Int. Cl.: B29D 23/00, F16L 11/04, B29C 49/42, B29L 23/00

(54) **TEILWEISE FLEXIBLER SCHLAUCH**

(30) Priorität: 17.03.2016 DE 102016204424
(71) Anmelder: ContiTech MGW GmbH, 34346 Hannoversch-Münden (DE)
(72) Erfinder: Vujosevic, Danilo, 30161 Hannover (DE); Seibold, Sebastian, 34346 Hannoversch Münden (DE)
(74) Vertreter: Preusser, Andrea

(57) **Zusammenfassung**

Einen teilweise flexiblen Schlauch, insbesondere einen teilweise flexiblen Ladeluftschlauch.

Der teilweise flexible Schlauch besteht aus einer unvernetzten thermoplastischen Zusammensetzung, welche wenigstens ein thermoplastisches Polymer enthält, und wobei der teilweise flexible Schlauch in Umfangsrichtung Abschnitte enthält, in denen die Polymerketten des thermoplastischen Elastomers verkürzt sind und / oder in denen die Bindungen der Polymerketten des thermoplastischen Elastomers vollständig oder teilweise zerstört sind.

## Beschreibung

Die Erfindung betrifft einen teilweise flexiblen Schlauch, insbesondere einen teilweise flexiblen Ladeluftschlauch.

Ladeluftschläuche enthalten in der Regel verschiedene Bauteile aus unterschiedlichen Materialien. Zum einen starre Rohre aus Plastik, ebenso wie elastische Kautschukschläuche, die mittels metallischen Ringen und Schellen verbunden werden. Des Weiteren kommen noch zusätzliche Bauteile für die Verbindung mit den Anschlüssen im Fahrzeug, wie z. Bsp. Filter, Luftkühlung, Sensoren, etc. hinzu.
Der elastische und somit flexible Anteil ist notwendig, um den verschiedenen Vibrationen, die aus dem Motorraum des Fahrzeugs kommen, stand zu halten.
Die verschiedenen Bauteile müssen jeweils in unterschiedlichen Herstellverfahren produziert und zusammengesetzt werden.
Um diesen Aufwand zu verringern ist es wünschenswert, den gesamten Schlauch, insbesondere den gesamten Ladeluftschlauch, in nur einem Prozess herstellen zu können.

In EP 1 878 961 B1 wird ein Ladeluftschlauch beschrieben, der mit einem einzigen Prozessschritt hergestellt werden kann. Hierbei wird ein Schlauch aus wenigstens einem vernetzbaren Material enthaltend Vernetzungsverstärker bzw. Koaktivatoren hergestellt und vor der Vernetzung teilweise abgedeckt bzw. maskiert, so dass nur definierte Stellen in Umfangsrichtung mittels hochenergetischer Beta- oder Gammastrahlung vernetzt werden. Die Maskierung bzw. Abdeckung erfolgt mit einem Strahlen abschirmenden Mittel, bevorzugt einer Metallfolie. Die Vernetzung mittels hochenergetischer Strahlung ist zum Einen sehr aufwendig und erfordert entsprechende Sicherheitsvorkehrungen, zum Anderen bedeutet die Maskierung wiederum einen zusätzlichen Arbeitsschritt. In der Summe stellt beides auch noch zusätzlich einen erhöhten Kostenfaktor dar.

Aufgabe der vorliegenden Erfindung ist es daher, einen teilweise flexiblen Schlauch bereitzustellen, der sich einfach herstellen lässt und der eine kostengünstigere, aber technisch gleichwertige, Alternative zu dem in EP 1 878 961 B1 offenbarten Schlauch darstellt.

Die Aufgabe wird dadurch gelöst, dass der teilweise flexible Schlauch vollständig aus einer unvernetzten thermoplastischen Zusammensetzung besteht, welche wenigstens ein thermoplastisches Polymer enthält, und wobei der teilweise flexible Schlauch in Umfangsrichtung Abschnitte enthält, in denen die Polymerketten des thermoplastischen Elastomers verkürzt sind und / oder in denen die Bindungen der Polymerketten des thermoplastischen Elastomers vollständig oder teilweise zerstört sind.
Somit erhält der Schlauch hierdurch in Umfangsrichtung Abschnitte mit unterschiedlichen physikalischen Eigenschaften, die sich gezielt und einfach an den gewünschten Stellen einstellen lassen.

Schläuche, deren Hauptbestandteile aus Thermoplasten bestehen oder die vollständig aus Thermoplasten aufgebaut sind, werden häufig auch als Rohre bezeichnet. Im Sinne der vorliegenden Erfindung kann der teilweise flexible Schlauch daher auch als teilweise flexibles Rohr bezeichnet werden. Im Rahmen der vorliegenden Erfindung sind diese beiden Begriffe somit austauschbar.

Thermoplaste bzw. thermoplastische Polymere sind lineare oder verzweigte Makromoleküle, die nicht vernetzt sind. Thermoplasten bestehen daher aus Polymerketten, die keine chemische Vernetzung zwischen den Ketten aufweisen. Durch die fehlende direkte Verknüpfung der langen Polymerketten gibt es somit keine Quervernetzungen. Zwischen den Polymerketten selbst bestehen nur physikalische Anziehungskräfte, sogenannte Nebenvalenzen, zumeist in Form von Wasserstoffbrückenbindungen, elektrostatischen Bindungen und ggf. anderen physikalischen Bindungsformen.

Als Thermoplasten können alle der fachkundigen Person bekannten Thermoplasten verwendet werden. Bevorzugt handelt es sich hierbei um hoch-dichtes Polyethylen (HDPE), Polyethylen mit ultrahoher Molmasse (UHMWPE), oder Polypropylen (PP) oder thermoplastisches Ethylen-Propylen-Copolymerharz oder thermoplastische Polyamidharze, wie etwa PA 6, PA66, PA46, PA11, PA12, PA610, PA612, PA 6/66-Copolymer, PA6/66/610- Copolymer, PA-MXD6, PA 6T, PA6/6T-Copolymer, PA 66/PP- Copolymer, PA 66/PPS-Copolymer, oder Vinylacetat (EVA) oder Polyvinylalkohol (PVA) oder Vinylalkohol- /Ethylen-Copolymer (EVOH) oder Polyvinylidenchlorid (PVDC) oder Polyvinylchlorid (PVC) oder Polyarylensulfide, wie bspw. Polyphenylensulfid (PPS) oder Vinylchlorid-/Vinylidenchlorid-Copolymer oder Vinylidenchlorid-/Methacrylat-Copolymer.
Die Thermoplasten können alleine oder in Kombination mit wenigstens einem weiteren Thermoplast verwendet werden.
Besonders gut geeignet hat sich PA66 gezeigt. PA66 ist ein teilkristallines Polymer mit einem besonders hohen Anteil der kristallinen Phase, was zu besonders guten mechanischen Eigenschaften führt.

Die thermoplastische Zusammensetzung kann des Weiteren noch zusätzlich wenigstens ein Verstärkungsmaterial enthalten. Hierbei kann es sich beispielsweise um Kurzfasern in verschiedenen Längen, bevorzugt zwischen 1mm und 5mm, handeln. Diese Kurzfasern können zum Beispiel aus Glas, Polyamid, Polyester, Carbon bestehen.

Die thermoplastische Zusammensetzung enthält wenigstens noch ein Additiv, welches sich bei Temperaturen oberhalb von 250°C zersetzt oder welches sich auf oder in einem Trägermaterial befindet und bei Temperaturen oberhalb von 250°C freigesetzt wird.
Das Additiv wird bevorzugt in einer Gesamtmenge von 0,2 bis 10 Gew.-% eingesetzt.

Durch die Zersetzung des Additivs entstehen Zersetzungsprodukte, die chemisch aktiv sind und zu Verkürzung der Polymerketten und / oder zu der Zerstörung der Bindungen führen.

Die Additive, welche sich auf einem Trägermaterial befinden und erst bei hohen Temperaturen freigesetzt werden, sind entweder direkt chemisch aktiv und verkürzen die Polymerketten und / oder zerstören die Bindungen zwischen den Polymerketten oder führen auch wieder bei den genannten höheren Temperaturen zur Entstehung von Zersetzungsprodukten, die chemisch aktiv sind und zu Verkürzung der Polymerketten und / oder zu der Zerstörung der Bindungen führen.

Als Additive können bevorzugt folgende Substanzen alleine oder in Kombination eingesetzt werden:
Ba(ClO₃)₂, Ba(ClO₄)₂, Ca(ClO₄)₂, Pb(ClO₄), LiClO₃, LiClO₄, Mg(ClO₄)₂, KClO₃, KClO₄, RbClO₃, NaClO₃, Mg(BrO₃)₂, Cu(IO₃)₂, Pb(IO₃)₂, Li₂IO₄, Ni(IO₃)₂, AgIO₃.

Auch weitere nicht genannte Additive sind möglich, die bei den genannten Temperaturen Zersetzungsprodukte bilden, welche chemisch aktiv sind und zu Verkürzung der Polymerketten und / oder zu der Zerstörung der Bindungen führen.

Ebenso sind weitere nicht genannte Additive möglich, die sich auf einem Trägermaterial befinden und erst bei hohen Temperaturen freigesetzt werden, sind entweder direkt chemisch aktiv und verkürzen die Polymerketten und / oder zerstören die Bindungen zwischen den Polymerketten oder führen auch wieder bei den genannten höheren Temperaturen zur Entstehung von Zersetzungsprodukten, die chemisch aktiv sind und zu Verkürzung der Polymerketten und / oder zu der Zerstörung der Bindungen führen.

Für jede thermoplastische Zusammensetzung muss in Abhängigkeit der Schmelztemperatur des Thermoplast, der Mischtemperatur der thermoplastischen Zusammensetzung und des Herstellverfahrens ein anderes Additiv oder eine andere Kombination von Additiven verwendet werden.

Der teilweise flexible Schlauch kann einlagig oder mehrlagig ausgebildet sein. Bevorzugt ist der Schlauch einlagig.

Handelt es sich um einen mehrlagigen Schlauch, so können zusätzlich noch weitere Schichten aus wenigstens einem Festigkeitsträger und / oder wenigstens eine Sperrschicht, die gegen chemisch aggressive Substanzen, wie Bsp. Öl, Kraftstoff, etc. zuverlässig abdichtet, vorhanden sein.

Der teilweise flexible Schlauch kann zunächst mittels aller der fachkundigen Person bekannten Verfahren hergestellt werden. Bevorzugt ist die Herstellung mittels eines Blasformverfahrens.

Hierzu werden zunächst alle Bestandteile der thermoplastischen Zusammensetzung vermischt, z. Bsp in einem Extruder, bevorzugt einem Schneckenextruder, und danach der Schlauch ausgeformt, bevorzugt mittels Blasformverfahren.

Anschließend werden die Abschnitte des flexiblen Schlauches, bei denen eine Anpassung bzw. Veränderung der physikalischen Eigenschaften gewünscht ist, lokal auf gezielte Temperaturen beheizt. Hierzu können Heizplatten oder Heizringe bzw. Heizmanschetten oder IR-Strahler oder andere Heizquellen, die einfach, kostengünstig und ohne aufwendige Sicherheitsvorkehrungen einsetzbar sind, verwendet werden.

Die Erfindung wird nun unter Bezugnahme auf Versuchs- und Vergleichsbeispiele und drei schematische Zeichnungen, ohne auf diese beschränkt zu sein, näher erläutert.

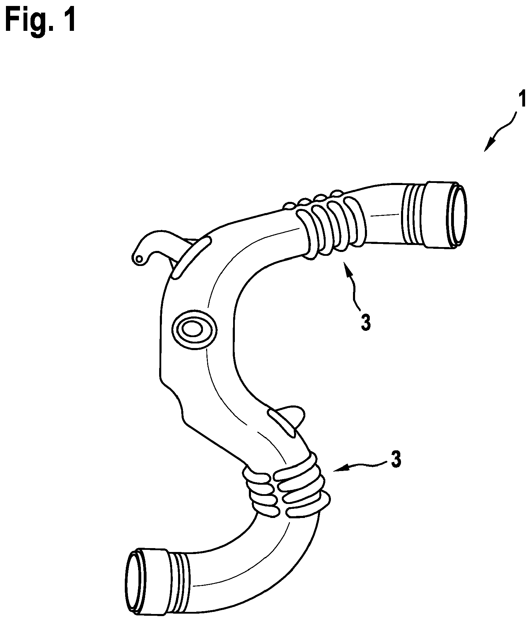

Fig.1 zeigt einen Schlauch 1 aufgebaut aus einem thermoplastischen Material mit Heizelementen 3, durch die der Schlauch an den gewünschten Stellen geheizt werden kann.

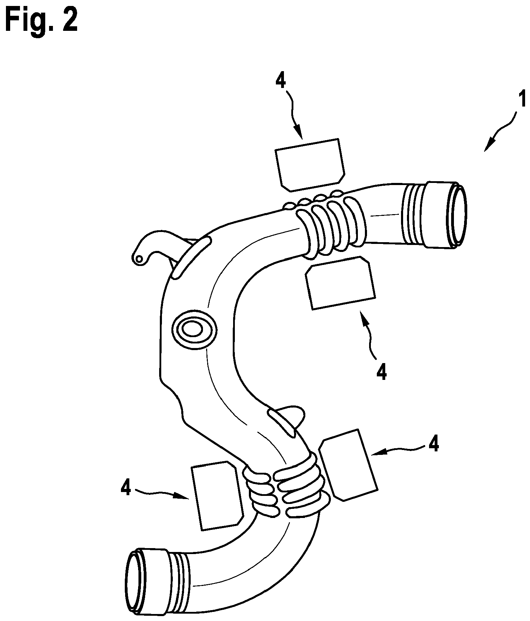

Fig.2 zeigt einen Schlauch 1 aufgebaut aus einem thermoplastischen Material mit Heizelementen 3, an denen der Schlauch an den gewünschten Stellen mittels Infrarotstrahlung und / oder Heizplatten 4 geheizt wird.

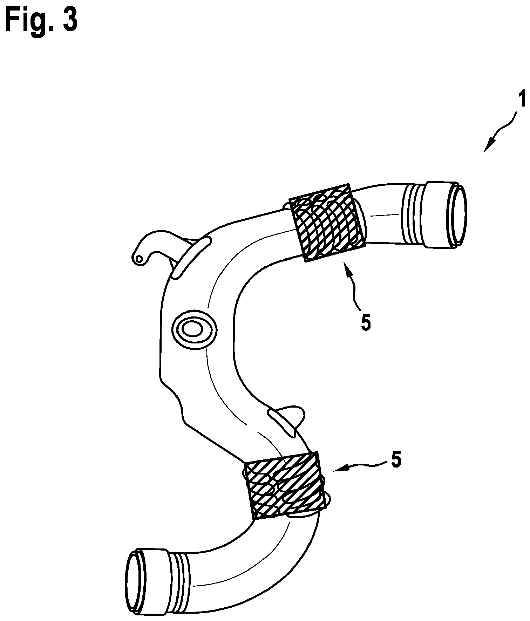

Fig.3 zeigt einen Schlauch 1 aufgebaut aus einem thermoplastischen Material, der an den beheizten Abschnitten 5 Eigenschaften aufweist, die sich von den Eigenschaften des restlichen Schlauchs unterscheiden. Dies sind die Abschnitte, in denen gemäß Anspruch 1 die Polymerketten des thermoplastischen Elastomers verkürzt sind und / oder in denen die Bindungen der Polymerketten des thermoplastischen Elastomers vollständig oder teilweise zerstört sind.

Tabelle 1 zeigt besonders vorteilhafte Kombinationen von Thermoplast und Additiv, wobei die angegebenen Additive jeweils alleine oder in Kombination eingesetzt werden können.

**Tabelle 1**

| **Polymer** | **Additiv** | **Zersetzungstemperaturen** | **Art der Beheizung** | **Prozessparameter** (Temperaturen und Heizzeiten bei Heizelementen, Strahlzeiten bei IR) | **Flexular Modulus - Änderung nach Beheizung** |
|---|---|---|---|---|---|
| PP | Pb(ClO₄)₂, Mg(ClO₄)₂, Mg(BrO₃)₂, und / oder weitere. | 280 °C bis 330 °C | Heizelemente | 280 °C bis 330 °C, 0 bis 30 s | -1% bis - 10% |
| | | | IR-Strahlung | 0 bis 50 s, Wellenlängen: kurze 800 nm bis 1400 oder mittlere 1400 nm bis 3 µm | -1% bis -10% |
| PA66 | Ba(ClO₃)₂, Ba(ClO₄)₂, LiClO₃, LiClO₄, NaClO₃, Cu(IO₃)₂, Pb(IO₃)₂, und/ oder weitere. | 380 °C bis 430 °C | Heizelemente | 380°C bis 430 °C, 0 bis 30 s | -1% bis -10% |
| | | | IR-Strahlung | 0 bis 50 s, Wellenlängen: kurze 800 nm bis 1400 oder mittlere 1400 nm bis 3 µm | -1% bis -10% |
| PPS | Ba(ClO₃)₂, LiClO₃, Mg(ClO₄)₂, NaClO₃, und / oder weitere. | 340 °C bis 400 °C | Heizelemente | 340 °C bis 400 °C 0 bis 30 s | -1% bis -10% |
| | | | IR-Strahlung | 0 bis 50 s, Wellenlängen: kurze 800 nm bis 1400 oder mittlere 1400 nm bis 3 µm | -1% bis -10% |

## Patentansprüche

1. Teilweise flexibler Schlauch, **dadurch gekennzeichnet, dass** der teilweise flexible Schlauch vollständig aus einer unvernetzten thermoplastischen Zusammensetzung besteht, welche wenigstens ein thermoplastisches Polymer enthält, und wobei der teilweise flexible Schlauch in Umfangsrichtung Abschnitte enthält, in denen die Polymerketten des thermoplastischen Elastomers verkürzt sind und / oder in denen die Bindungen der Polymerketten des thermoplastischen Elastomers vollständig oder teilweise zerstört sind.

2. Teilweise flexibler Schlauch nach Anspruch 1, **dadurch gekennzeichnet, dass** das thermoplastische Polymer PPS oder PP oder PA6.6 ist.

3. Teilweise flexibler Schlauch nach einem der Ansprüche 1 oder 2, **dadurch gekennzeichnet, dass** das die thermoplastische Zusammensetzung Glasfasern enthält.

4. Verfahren zur Herstellung eines teilweise flexiblen Schlauches nach einem der Ansprüche 1 bis 3, **gekennzeichnet durch** wenigstens folgende Verfahrensschritte:
- Vermischen aller Bestandteile der thermoplastischen Zusammensetzung in einem ersten Verfahrensschritt und
- Ausformen des Schlauches in wenigstens einem weiteren Verfahrensschritt und
- Beheizen von Abschnitten des Schlauches in einem abschließenden Verfahrensschritt.

5. Verfahren zur Herstellung eines teilweise flexiblen Schlauches nach Anspruch 4, **dadurch gekennzeichnet, dass** das Vermischen der Bestandteile der thermoplastischen Zusammensetzung in einem Extruder erfolgt.

6. Verfahren zur Herstellung eines teilweise flexiblen Schlauches nach einem der Ansprüche 4 oder 5, **dadurch gekennzeichnet, dass** das Ausformen des Schlauches mittels eines Blasformverfahrens erfolgt.

7. Verfahren zur Herstellung eines teilweise flexiblen Schlauches, **dadurch gekennzeichnet, dass** das Beheizen der Abschnitte des Schlauches mit Hilfe von Infrarotstrahlern und / oder Heizplatten erfolgt.
